# EUROPÄISCHE PATENTSCHRIFT

(11) **EP 0 543 817 B1**
(45) Veröffentlichungstag und Bekanntmachung des Hinweises auf die Patenterteilung: **07.02.1996**
(21) Anmeldenummer: 91905022.9
(22) Anmeldetag: 27.02.1991
(51) Int. Cl.: C08G 18/08, C08G 18/10, C08G 18/42, C08G 18/79

(54) **VERFAHREN ZUR HERSTELLUNG EINER MEHRSCHICHTIGEN LACKIERUNG**
PROCESS FOR PRODUCING A MULTICOAT LACQUERING
PROCEDE DE PRODUCTION D'UN ENDUIT DE LAQUE A COUCHES MULTIPLES

(30) Priorität: 05.03.1990 DE 4006832
(43) Veröffentlichungstag der Anmeldung: 02.06.1993
(73) Patentinhaber: BASF Lacke + Farben AG, D-48165 Münster-Hiltrup (DE)
(72) Erfinder: BALTUS, Wolfgang, D-4400 Münster (DE); BERG, Jan, D-4400 Münster (DE); DOBBELSTEIN, Arnold, verstorben (DE)
(74) Vertreter: Münch, Volker, Dr.
(86) Internationale Anmeldenummer: EP9100358
(87) Internationale Veröffentlichungsnummer: WO9113923

(56) Entgegenhaltungen:
- EP-A- 0 000 171
- EP-A- 0 234 361
- EP-A- 0 355 433
- WO-A-87/03829

## Beschreibung

Die Erfindung betrifft ein Verfahren zur Herstellung einer mehrschichtigen Lackierung auf einer Substratoberfläche, bei dem
- (1): ein pigmentierter wäßriger Basislack, der aus Polyesterpolyolen und Polyisocyanaten erhältliche vernetzte Polymermikroteilchen enthält, auf die Substratoberfläche aufgebracht wird
- (2): aus der in Stufe (1) aufgebrachten Zusammensetzung ein Polymerfilm gebildet wird
- (3): auf der so erhaltenen Basisschicht ein transparenter Decklack aufgebracht wird und anschließend
- (4): die Basisschicht zusammen mit der Deckschicht eingebrannt wird.

Die Erfindung betrifft auch einen wäßrigen Lack, der aus Polyesterpolyolen und Polyisocyanaten erhältliche vernetzte Polymermikroteilchen enthält und die Verwendung dieses Lackes zur Herstellung von Füller- und/oder Steinschlag zwischengrundschichten in Automobillackierungen.

Das oben beschriebene Verfahren kann insbesondere bei der Automobillackierung zur Herstellung von mehrschichtigen Lackierungen des basecoat-clearcoat Typs - insbesondere zur Herstellung von Metalleffektlackierungen - eingesetzt werden (vgl. z.B. DE-OS-36 06 512).

Bei der Herstellung der vernetzten Polymermikroteilchen nach dem in der DE-OS-36 06 512 offenbarten Verfahren werden in der Regel Dispersionen mit einem relativ hohen Koagulatanteil und einer unbefriedigenden Lagerstabilität erhalten. Ein weiterer Nachteil der in der DE-OS-36 06 512 offenbarten Polymermikroteilchen ist der, daß wäßrige Metalleffektlacke, die diese Polymermikroteilchen enthalten, oft eine relativ starke Wasserstoffentwicklung zeigen.

Die der vorliegenden Erfindung zugrundeliegende Aufgabenstellung besteht darin, das im Oberbegriff des Hauptanspruchs beschriebene Verfahren zu verbessern.

Diese Aufgabe wird überraschenderweise dadurch gelöst, daß bei dem im Oberbegriff beschriebenen Verfahren ein Basislack eingesetzt wird, der vernetzte Polymermikroteilchen enthält, die erhältlich sind, indem
- (A): ein Polyesterpolyol, ein Gemisch aus Polyesterpolyolen oder eine Mischung aus Polyesterpolyolen und weiteren Verbindungen, die gegenüber NCO-Gruppen reaktive Gruppen enthalten, mit einem Polyisocyanat oder einem Gemisch aus Polyisocyanaten umgesetzt wird, wobei die mittlere OH-Funktionalität der Polyesterpolyolkomponente über 2 und/oder die mittlere NCO-Funktionalität der Polyisocyanatkompo-nente über 2 liegt und zumindest ein Teil der Polyesterpolyolkomponente und/oder zumindest ein Teil der Polyisocyanatkomponente stabilisierende ionische- und/oder Poly(oxyalkylen)gruppen enthält, wobei die ionischen Gruppen durch Neutralisierung von zur Salzbildung befähigten Gruppen mit Hilfe von Basen bzw. Säuren gebildet werden und
- (B): nachdem mindestens 25 % der NCO-Gruppen umgesetzt worden sind, das so erhaltene Reaktionsgemisch in Wasser dispergiert wird.

Im ersten Schritt des Verfahrens zur Herstellung der erfindungsgemäß eingesetzten Polymermikroteilchen wird ein Polyesterpolyol oder ein Gemisch aus Polyesterpolyolen mit einem Polyisocyanat oder einem Gemisch aus Polyisocyanaten so miteinander umgesetzt, daß mindestens 25 %, vorzugsweise 30 bis 60, besonders bevorzugt 35 bis 45 %, der im Reaktionsgemisch enthaltenen NCO-Gruppen umgesetzt werden. Die auf diese Weise erhaltenen Vorpolymere werden anschließend in Wasser dispergiert, wo sie zu vernetzten Polymermikroteilchen ausreagieren.

Um vernetzte Polymermikroteilchen zu erhalten, muß die mittlere OH-Funktionalität der Polyesterpolyolkomponente über 2 und/oder die NCO-Funktionalität der Polyisocyanatkomponente über 2 liegen. Zweckmäßigerweise werden Polyesterpolyole bzw. Polyesterpolyolgemische mit einer mittleren OH-Funktionalität von 2,0 bis 4,0, vorzugsweise 2,0 bis 3,0, besonders bevorzugt 2,2 bis 2,6 und Polyisocyanate bzw. Polyisocyanatgemische mit einer mittlern NCO-Funktionalität von 2,0 bis 4,0, vorzugsweise 2,0 bis 3,0, besonders bevorzugt 2,9 bis 3,1 eingesetzt.

Um stabile Polymermikroteilchendispersionen zu erhalten, muß zumindest ein Teil der Polyesterpolyolkomponenten und/oder zumindest ein Teil der Polyisocyanatkomponente stabilisierende ionische und/oder nicht-ionische Gruppen enthalten. Die stabilisierenden Gruppen befinden sich vorzugsweise in der Polyesterpolyolkomponente. Als stabilisierende Gruppen werden vorzugsweise ionische, besonders bevorzugt anionische Gruppen, wie z.B. Carboxylat-, Sulfonsäure- und Phosphatgruppen eingesetzt. Ganz besonders bevorzugt werden Carboxylatgruppen als stabilisierende Gruppen eingesetzt. Als nichtionische stabilisierende Gruppen werden Poly(oxyalkylen)gruppen, eingesetzt, wie z.B. Poly(oxyethylen)-, Poly(oxypropylen)- und Poly(oxyethylen-oxypropylen)-Gruppen.

Die Ermittlung des für die Bildung einer stabilen Dispersion notwendigen Gehalts an stabilisierenden Gruppen ist mit Hilfe einfacher Reihenversuche möglich. Bei der bevorzugten Stabilisierung mittels Carboxylatgruppen sollten in einem Mol der Polyesterpolyolkomponente mindestens 0,3 Äquivalente Carboxylatgruppen enthalten sein.

Die Neutralisierung von zur Salzbildung befähigten Gruppen mit Hilfe von Basen bzw. Säuren erfolgt vorzugsweise kurz vor der Dispergierung bzw. während der Dispergierung des in Stufe (A) entstandenen Reaktionsgemisches in dem wäßrigen Dispergiermedium.

Als zur Salzbildung befähigte Gruppen kommen vor allem Carboxyl- und Sulfonsäuregruppen in Betracht. Diese Gruppen werden bevorzugt mit einem tertiären Amin neutralisiert. Geeignete tertiäre Amine zur Neutralisation der zur Anionenbildung befähigten Gruppen sind beispielsweise Trimethylamin, Triethylamin, Dimethylanilin, Diethylanilin, Triphenylamin, N,N-Dimethylethanolamin, Morpholin und dergleichen.

Im Gegensatz zur Lehre der DE-OS-36 06 512 ist es für die vorliegende Erfindung erfindungswesentlich, daß die Polyesterpolyolkomponente und die Polyisocyanatkomponente vor der Dispergierung in Wasser einer Vorreaktion unterzogen werden (vgl. Spalte 9, Zeilen 33 bis 38 der DE-OS 36 06 512).

Diese Vorreaktion zwischen der Polyesterpolyolkomponente und der Polyisocyanatkomponente kann sowohl in Abwesenheit von Lösemitteln als auch in gegenüber NCO-Gruppen inerten Lösemitteln durchgeführt werden. Die Vorreaktion wird vorzugsweise bei 20 bis 80°C, besonders bevorzugt bei 20 bis 35°C in einem gegenüber NCO-Gruppen inerten wasserverdünnbaren Lösemittel (z.B. Aceton oder Methylethylketon) durchgeführt. Die Vorreaktion wird mindestens so weit geführt, bis 25 % der NCO Gruppen umgesetzt worden sind. Der NCO-Gruppengehalt des Reaktionsgemisches kann z.B. titrimetrisch mit Hilfe von Dibutylamin verfolgt werden. Die Vorreaktion wird zweckmäßigerweise so weit geführt, bis 30 bis 60, vorzugsweise 35 bis 45 % der NCO-Gruppen des Reaktionsgemisches umgesetzt worden sind.

Die Vorreaktion kann selbstverständlich mit für die Bildung von Urethanen gebräuchlichen Katalysatoren, wie z.B. Dibutylzinndilaurat, Triethylamin usw. katalysiert werden.

Die Stufe (A) wird bevorzugt in einem gegenüber NCO-Gruppen inerten, wasserverdünnbaren organischen Lösemittel durchgeführt.

Das nach der Vorreaktion erhaltene Reaktionsgemisch wird in Wasser dispergiert. Das Wasser kann auch noch organische Lösemittel enthalten. Als Beispiele für Lösemittel, die im Wasser vorhanden sein können, seien heterocyklische, aliphatische oder aromatische Kohlenwasserstoffe, ein- oder mehrwertige Alkohole, Ether, Ester und Ketone, wie z.B. N-Methylpyrrolidon, Toluol, Xylol, Butanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron oder Mischungen davon genannt.

Nach Überführung des in Stufe (A) erhaltenen Reaktionsgemisches in Wasser wird eine stabile wäßrige Dispersion erhalten. Bei dem erfindungsgemäßen Verfahren ist es - im Unterschied zur Lehre der DE-OS-36 06 512 - nicht notwendig, die - nach Überführung des in Stufe (A) erhaltenen Reaktionsgemisches in Wasser - erhaltene Dispersion zur Bildung von vernetzten Polymermikroteilchen zu erhitzen. Die daraus resultierenden Vorteile sind: niedrigerer Koagulatanteil, geringere Schaumbildung, erhöhte Dispersionsstabilität.

Es ist selbstverständlich auch möglich, die - nach Überführung des in Stufe (A) erhaltenen Reaktionsgemisches in Wasser - erhaltene Dispersion zur Bildung von vernetzten Polymermikroteilchen unter zumindest teilweisem Verzicht auf die vorgenannten Vorteile zu erhitzen.

Der Durchmesser der vernetzten Polymermikroteilchen sollte vorzugsweise unter einem Mikrometer, besonders bevorzugt zwischen 0,05 und 0,2 µm liegen. Die Größe der Teilchen wird u.a. bestimmt von der Viskosität der in Stufe (A) entstandenen Reaktionsmischung, vom Gehalt an stabilisierenden Gruppen und von der Rührgeschwindigkeit beim Dispergieren. Viskositätserniedrigung, Erhöhung des Gehaltes an stabilisierenden Gruppen und Erhöhung der Rührgeschwindigkeit führen zur Verkleinerung der Teilchen.

Wenn die Vorreaktion in Anwesenheit eines oder mehrerer organischer Lösemittel durchgeführt wurde ist es in vielen Fällen vorteilhaft, das oder die Lösemittel aus der wäßrigen Dispersion ggf. im Vakuum destillativ abzutrennen.

Beispiele geeigneter Polyesterpolyole sind insbesondere die in der Polyurethanchemie an sich bekannten Umsetzungsprodukte von mehrwertigen Polyolen mit Polycarbonsäuren bzw. Polycarbonsäureanhydriden.

Zur Herstellung der Polyesterpolyole geeignete Polyole sind z.B. Ethylenglykol, Propandiol-1,2 und -1,3, Butandiol-1,3 und -1,4, die isomeren Pentandiole, Hexandiole oder Oktandiole, wie z.B. 2-Ethylhexandiol-1,3, Trimethylolpropan, Glycerin, Bishydroxymethylcyclohexan, Erythrit, Mesoerythrit, Arabit, Adonit, Xylit, Mannit, Sorbit, Dulcit, Hexantriol, (Poly)-Pentaerythritol usw.

Die zur Herstellung der Polyesterpolyole geeigneten Polycarbonsäuren bestehen in erster Linie aus niedermolekularen Polycarbonsäuren oder ihren Anhydriden mit 2 - 18 Kohlenstoffatomen im Molekül.

Di- und Tricarbonsäuren werden bevorzugt eingesetzt. Geeignete Säuren sind beispielsweise Oxalsäure, Bernsteinsäure, Fumarsäure, Phthalsäure, Isophthalsäure, Terephthalsäure, Tetrahydrophthalsäure, Hexahydrophthalsäure, Adipinsäure, Acelainsäure, Sebacinsäure, Maleinsäure, Glutarsäure, Hexachlorphtaldicarbonsäure, Tetrachlorphthalsäure und Trimellithsäure. Anstelle dieser Säuren können auch ihre Anhydride, soweit diese existieren, eingesetzt werden.

Es können auch Polyesterpolyole eingesetzt werden, die durch Polymerisation von Laktonen hergestellt worden sind.

Die Polyesterpolyole werden vorzugsweise so ausgewählt, daß sie für sich allein in Wasser stabil dispergiert werden können. Die Zusammenhänge zwischen dem Aufbau von Polyesterpolyolen (Säurezahl, Molekulargewicht...) und deren Dispergierverhalten sind dem Durchschnittsfachmann gut bekannt und er kann mit Hilfe einiger weniger orientierender Vorversuche die zur Lösung der jeweiligen Problemstellung optimale Polyesterpolyolkomponente auswählen.

Es ist bevorzugt, Polyesterpolyole einzusetzen, die ein zahlenmittleres Molekulargewicht von 80 bis 2000, vorzugsweise 500 bis 1000, besonders bevorzugt 700 bis 800 aufweisen. Es können auch Mischungen aus Polyesterpolyolen und weiteren Verbindungen, die gegenüber NCO-Gruppen reaktive Gruppen enthalten (Polyetherpolyole, Polyamine...) eingesetzt werden.

Bevorzugt wird als Polyesterpolyol ein carboxylgruppenhaltiges Polyesterpolyol mit einem zahlenmittleren Molekulargewicht von 500 bis 1500 eingesetzt.

Unter Polyisocyanaten werden Verbindungen verstanden, die im statistischen Mittel mehr als eine NCO-Gruppe pro Molekül enthalten. Als Beispiele seien genannt: Trimethylendiisocyanat, Tetramethylendiisocyanat, Pentamethylendiisocyanat, Hexamethylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanato- methyl-5-isocyanato-1,3,3-trimethylcyclohexan, Bis-(4-isocyanatocyclohexyl)-methan, Bis-(4-isocyanatophenyl)-methan, 4,4'-Diisocyanatodiphenylether und 2,3 Bis-(8-isocyanatooctyl)-4-octyl-5-hexyl-cyclohexen.

Es ist auch möglich, isocyanatgruppenhaltige Präpolymere als Polyisocyanatkomponenten einzusetzen. Beispiele für geeignete Präpolymere sind Reaktionsprodukte aus Polyisocyanaten, Polyether- und/oder Polyesterpolyolen sowie gegebenenfalls üblichen Kettenverlängerungsmitteln.

Bei der vorliegenden Erfindung werden vorzugsweise cycloaliphatische und oder aliphatische Polyisocyanate, die gegebenenfalls dimerisiert oder trimerisiert sein können oder Mischungen aus solchen Polyisocyanaten eingesetzt. Besonders bevorzugt werden cycloaliphatische oder aliphatische Triisocyanate, insbesondere trimerisierte aliphatische Diisocyanate eingesetzt.

Auf die oben beschriebene Art und Weise werden wäßrige Dispersionen vernetzter Polymermikroteilchen erhalten, die einen niedrigen Koagulatanteil enthalten, eine befriedigende Lagerstabilität aufweisen und auf übliche Art und Weise in pigmentierte wäßrige Basislacke (vgl. z.B. DE-OS-35 45 618) zur Herstellung von mehrschichtigen Lackierungen des basecoat-clearcoat-Typs, insbesondere Metalleffektlackierungen eingearbeitet werden können. Diese Basislacke zeichnen sich durch hohe Lagerstabilität, hohe Gasungsstabilität und niedrige Viskosität bei hohem Feststoffgehalt aus und liefern Metalleffektlackierungen mit sehr gutem Metalleffekt.

Die nach dem erfindungsgemäßen Verfahren hergestellten Dispersionen vernetzer Polymermikroteilchen können im Prinzip in jeden wäßrigen Lack eingearbeitet werden. Auf diese Weise ist es möglich, den Feststoffgehalt der wäßrigen Lacke zu erhöhen, ohne daß gleichzeitig eine starke Viskositätserhöhung eintritt. Werden die in Rede stehenden Dispersionen vernetzter Polymermikroteilchen in wäßrige Lacke zur Herstellung von Füller- und/oder Steinschlagzwischengrundschichten in Automobillackierungen eingearbeitet, so werden vorteilhafterweise matte Filme erhalten. Wäßrige Lacke zur Herstellung von Füller- und/oder Steinschlagzwischengründen sind schon lange bekannt und werden beispielsweise in der DE-OS-38 05 629 beschrieben.

Die erfindungsgemäßen vernetzten Polymermikroteilchen werden in solchen Mengen in die wäßrigen Lacke eingearbeitet, daß die erwünschten Eigenschaften ein Optimum erreichen. Die dazu notwendigen Optimierungsarbeiten gehören zu den Routinearbeiten des Fachmanns. Basislacke enthalten üblicherweise 10 bis 70, vorzugsweise 30 bis 40 Gewichtsprozent und wäßrige Lacke zur Herstellung von Füller- und/oder Steinschlagzwischengrundschichten enthalten üblicherweise 5 bis 50, vorzugsweise 10 bis 25 Gewichtsprozent der erfindungsgemäßen vernetzten Polymermikroteilchen, wobei die Gewichtsprozentangaben auf die im Lack enthaltene Gesamtmenge an Bindemittel und Vernetzungsmittel bezogen sind.

Das in Stufe (A) erhaltene Reaktionsgemisch wird vorzugsweise in einer solchen Menge in Wasser dispergiert, daß die erhaltene Dispersion einen Feststoffgehalt von 20 - 50 Gew.-% aufweist.

Die die erfindungsgemäßen Polymermikroteilchen enthaltenden Lacke können auf alle Substrate, insbesondere Metalle, aber auch auf Holz, Kunststoff usw. durch Spritzen, Tauchen, Streichen oder Rakeln, vorzugsweise durch Spritzen, appliziert werden. Die die erfindungsgemäßen Polymermikroteilchen enthaltenden Basislacke können im Prinzip mit jedem Klarlack, z.B. mit lösemittelhaltigen Klarlacken, wäßrigen Klarlacken oder Pulverklarlacken überlackiert werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### Beispiele:

### 1. Herstellung von Polyesterpolyolen

### 1.1 Polyester 1

2870,1 Gew.-Teile Hexandiol-1,6 und 1076,0 Gew.-Teile Isophthalsäure werden bei 230°C bis zu einer Säurezahl von 5 präkondensiert. Anschließend wird bei 160°C mit 1485,3 Gew.-Teilen Trimellithsäureanhydrid bis zu einer Säurezahl von 57 umgesetzt. Es resultiert ein Polyester mit einem OH-Äquivalentgewicht von 286. Der Polyester wird 68 %ig in Methylethylketon angelöst.

### 1.2 Polyester 2:

2870,1 Gew.-Teile Hexandiol-1,6 und 1076,0 Gew.-Teile Adipinsäure werden bei 230°C bis zu einer Säurezahl von 5 präkondensiert. Anschließend wird bei 160°C mit 1485,3 Gew.-Teilen Trimellithsäureanhydrid bis zu einer Säurezahl von 66 umgesetzt. Es resultiert ein Polyester mit einem OH-Äquivalentgewicht von 302. Der Polyester wird 75 %ig in Methylethylketon angelöst.

### 2. Herstellung erfindungsgemäßer Polymermikroteilchen

### 2.1 Dispersion 1

407,0 Gew.-Teile Polyester 1 und 233,5 Gew.-Tei trimerisiertes Hexamethylendiisocyanat (Desmodur N 3390®) werden bei Raumtemperatur unter Rühren gemischt und mit 168 Gew.-Teilen Methylethylketon versetzt. Nach 1 h Rühren bei 30°C - 35°C ist eine Viskosität zwischen 0,3 und 0,4 Pa s und ein NCO-Umsatz von 35 - 40 % erreicht. Zu der Reaktionsmischung werden innerhalb von 5 Minuten 500,0 Gew.-Teile deionisiertes Wasser zugegeben. Nach 2 Minuten Wasserzulauf werden 20,0 Gew.-Teile N,N-Dimethylethanolamin (DMEA) innerhalb von 3 Minuten zudosiert. Nach 2 Minuten Rühren werden 1300 Gew.-Teile deionisiertes Wasser innerhalb von 30 Mi- nuten zugetropft. Die Dispergiertemperatur wird dabei bei 30°C gehalten. Nach 4 bis 5 h Rühren bei 30°C läßt sich titrimetrisch (Bestimmung nach DIN 53185) kein NCO mehr nachweisen.

Die Dispersion wird über ein 31 µm-Sieb filtriert.

Es resultiert eine milchige Dispersion, die in Tetrahydrofuran unlöslich ist.

### Kenndaten:

Feststoffgehalt (1 h, 130°C): 22 Gew.-%
pH: 7,8 - 8,05
Teilchengröße: 70 nm (Autosizer)
Koagulatgehalt: 0,001 Gew.-%, bezogen auf Gesamteinwaage
Viskosität: 0,0029 Pas

### 2.2 Dispersion 2

407,0 Gew.-Teile Polyester 2 und 233,7 Gew.-Teile trimerisiertes Hexamethylendiisocyanat (Desmodur N 3390®) werden bei Raumtemperatur unter Rühren gemischt. Nach 0,5 h Rühren bei 30°C - 35°C ist eine Viskosität zwischen 0,3 und 0,4 Pa s und ein NCO-Umsatz von 35-40 % erreicht. Zu der Reaktionsmischung werden innerhalb von 5 Minuten 500,0 Gew.-Teile deionisiertes Wasser zugegeben. Nach 2 Minuten Wasserzulauf werden 20,0 Gew.-Teile N,N-Dimethylethanolamin (DMEA) innerhalb von 3 Minuten zudosiert. Danach wird 2 Minuten gerührt und anschließend werden 500,0 Gew.-Teile deionisiertes Wasser innerhalb von 30 Minuten zugetropft. Die Dispergiertemperatur wird dabei bei 30°C gehalten. Nach 4 bis 5 h Rühren bei 30°C läßt sich titrimetrisch (nach DIN 53185) kein NCO mehr nachweisen.

Nach Filtration über ein 31 µm-Sieb resultiert eine milchige Dispersion, die in Tetrahydrofuran unlöslich ist.

### Kenndaten

Feststoffgehalt (1 h 130°C): 35 Gew.-%
pH: 7,95
Koagulat: 0,01 Gew.-%, bezogen auf Gesamtauswaage
Teilchengröße: 68 nm (Autosizer)
Viskosität: 0,058 Pas

### 3. Einsatz der erfindungsgemäßen Polymermikroteilchen in einem wässrigen Basislack

25 Gew.-Teile eines Verdickungsmittels (Paste eines Natrium-Magnesium-Silikats mit Schichtstruktur, 3 %ig in Wasser) werden unter Rühren mit 27 Gew.-Teilen der erfindungsgemäßen Dispersion 1 versetzt. Unter weiterem Rühren werden 5 Gew.-Teile eines Polyesterharzes (1), 0,5 Gew.-Teile Dimethylethanolamin (10 %ig in Wasser), 2 Gew.-Teile eines Melaminharzes (2), 5 Gew.-Teile einer handelsüblichen Aluminiumpigmentpaste, 5 Gew.-Teile Butylglykol und 27,5 Gew.-Teile Wasser zugegeben. Nachdem 30 Minuten gerührt worden ist, wird mit Wasser eine Auslaufzeit von 25 s (gemessen im DIN 4-Becher bei 23°C) eingestellt.

In einem Vergleichsbeispiel werden die 25 Gew.-Teile der erfindungsgemäßen Dispersion 1 gegen 22,5 Gew.-Teilen einer unvernetzten Polyurethan-Dispersion (3) ausgetauscht.

Der erhaltene Basislack wird auf ein phosphatiertes Stahlblech aufgespritzt. Nach einer Ablüftzeit von 15 Minuten bei Raumtemperatur wird ein handelsüblicher 2-Komponentenklarlack auf Basis Polyacrylat/Polyisocyanat aufgebracht und der so erhaltene Zweischichtüberzug im Umluftofen 30 Minuten bei 140°C eingebrannt.
- (1): Wasserlöslicher Polyester aus 832 Gew.-Teilen Neopentylglykol, 664 Gew.-Teilen Isophthalsäure und 384 Gew.-Teilen Trimellithsäureanhydrid; hergestellt wie in Beispiel 1.1 beschrieben. Es wird mit 425 g Butanol verdünnt.
Säurezahl des Polyesters: 39
- (2): Es wird ein handelsübliches, niedrigmolekulares, mit Methanol hochverethertes Melamin-Formaldehydharz mit einem Festkörpergehalt von 70 % in Wasser eingesetzt.
- (3): Polyurethanharz auf Basis eines Kondensationsproduktes einer polymeren Fettsäure mit Isophthalsäure, Hexandiol-1,6, Dimethylolpropionsäure und Neopentylglykol, umgesetzt mit Isophorondiisocyanat in Methylethylketon, kettenverlängert mit Trimethylolpropan, neutralisiert mit Dimethylethanolamin und 27 Gew.-%ig in Wasser dispergiert.

### Ergebnisse:

| | Effekt 1) | DOI |
|---|---|---|
| Lack 1 | | |
| Dispersion 1 | 145 | 93 |
| Lack 2 | | |
| Vergleichsbeispiel | 125 | 90 |

| | | |
|---|---|---|
| 1) Der Metalleffekt wird mit einem Goniophotometer ermittelt. Der angegebene Zahlenwert ist der Quotient aus der gemessenen Aufsichthelligkeit R_{A} und Schrägsichthelligkeit R_{S} multipliziert mit 100. | | |

R_{A} wird gemessen bei einer Beleuchtung unter 45° und Beobachtung unter -38° mit Apperturwinkeln von 0,25°.

R_{S} wird gemessen bei einer Beleuchtung unter 70° mit 1° Appertur und senkrechter Beobachtung mit 2° Appertur.

### 4. Einsatz von Dispersion 2 in einem wässrigen Lack zur Herstellung von Füllerschichten in Automobillackierungen

Aus folgenden Komponenten wird ein wäßriger Lack hergestellt:

| | |
|---|---|
| 1. Netzmittel, handelsüblich | 0,2 Gew.-Teile |
| 2. Dimethylethanolamin (DMEA) | 0,1 Gew.-Teile |
| 3. Butyldiglykol | 2,5 Gew.-Teile |
| 4. Antiabsetzmittel (z.B. Additol XW 395®) | 3,4 Gew.-Teile |
| 5. Flammruß | 0,15 Gew.-Teile |
| 6. Talkum | 1,38 Gew.-Teile |
| 7. Titandioxid | 11,75 Gew.-Teile |
| 8. Schwerspat | 11,75 Gew.-Teile |
| 9. Melaminharz (Cymel 303®) | 2,55 Gew.-Teile |

| | V1 | V2 | V3 |
|---|---|---|---|
| 10. PUR-Dispersion (1) | 42,1 | 24,5 | 55,7 |
| Gew.-Teile | | | |
| | | | |
| 11. Dispersion 2 | 6,2 | 21,6 | 0 |
| Gew.-Teile | | | |
| | | | |
| 12. Polyester (2) | 10,7 | 10,7 | 12,1 |
| Gew.-Teile | | | |

Die Komponenten 1 - 8 werden mit dem Polyester und 1/3 der Menge an Dispersion 2 gemischt und in einer Sandmühle gemahlen. Zum Mahlgut werden die Polyurethandispersion 10, der verbliebene Rest der Dispersion 2 und das Melaminharz zugegeben und ca. 30 Minuten dissolvert. Der so erhaltene Lack wird mit Dimethylethanolamin auf einen pH von 7,7 und mit Wasser auf eine Viskosität von 25 s DIN 4 eingestellt.

Der Lack wird auf ein mit handelsüblicher Elektrotauchlackierung beschichtetes, phosphatiertes Stahlblech aufgespritzt und 20 Minuten bei 160°C im Umluftofen eingebrannt.
- (1): Polyurethanharz auf Basis eines Kondensationsproduktes von Adipinsäure mit Hexandiol-1,6 und Neopentylglykol, umgesetzt mit 4,4-Diisocyanatodicyclohexylmethan in Methylethylketon, kettenverlängert mit Trimethylolpropan, neutralisiert mit Dimethylethanolamin und 35 Gew.-%ig in Wasser dispergiert.
- (2): Nach dem Verfahren wie bei Polyester 1 beschrieben wurden Neopentylglycol, Tetrahydrophthalsäureanhydrid und Isophthalsäure (Molverhältnis 1,33 : 0,33 : 0,44) bei 200°C bis Säurezahl 18 präkondensiert und mit 0,33 Mol Trimellithsäureanhydrid bei 180°C bis zu einer Säurezahl von 58 umgesetzt. Der Polyester wurde 85 %ig in Butylglykol angelöst und mit Dimethylethanolamin 80 %ig neutralisiert. Anschließend wurde mit deionisiertem Wasser auf einen Festkörper von 60 % eingestellt.

### Ergebnisse:

| | | | |
|---|---|---|---|
| Ansatz | V1 | V2 | V3 |
| 60°-Glanz | 34 | 24 | 76 |
| Festkörper (25" DIN 4) | 49 | 52 | 45 |

### 5. Vergleichsbeispiele (es wird nach Lehre der DE-OS-3 606 512 verfahren).

### 5.1 Vergleichsdispersion 1

407,0 Gew.-Teile Polyester 1 werden mit 233,5 Gew.-Teilen trimerisiertem Hexamethylendiisocyanat (Desmodur N 3390®) und 168 Gew-Teilen Methylethylketon versetzt und nach Neutralisation mit 20 Gew.-Teilen Dimethylethanolamin in 1800 Gew.-Teilen deionisiertem Wasser dispergiert. Anschließend wird die so erhaltene Dispersion ca. 3 h bei 90°C gehalten. Dabei wird das Methylethylketon abdestilliert. Während der Reaktion wird starkes Schäumen beobachtet. Die erhaltene Dispersion ist nicht stabil.

### 5.2 Vergleichsdispersion 2

407 Gew.-Teile Polyester 1 werden mit 233,5 Gew.-Teilen Desmodur N 3390® gemäß Beispiel 5.1 umgesetzt. Dabei wird die Reaktionstemperatur bei 40°C gehalten. Es wird starkes Schäumen beobachtet.

Feststoffgehalt (1 h 130°C): 20,3 Gew.-% Koagulatgehalt: 3,9 Gew.-%, bezogen auf Gesamtauswaage

## Patentansprüche

1. Verfahren zur Herstellung einer mehrschichtigen Lackierung auf einer Substratoberfläche, bei dem
(1) ein pigmentierter wäßriger Basislack, der aus Polyesterpolyolen und Polyisocyanaten erhältliche vernetzte Polymermikroteilchen enthält, auf die Substratoberfläche aufgebracht wird
(2) aus der in Stufe (1) aufgebrachten Zusammensetzung ein Polymerfilm gebildet wird
(3) auf der so erhaltenen Basisschicht ein transparenter Decklack aufgebracht wird und anschließend
(4) die Basisschicht zusammen mit der Deckschicht eingebrannt wird,
dadurch gekennzeichnet, daß die im Basislack enthaltenen vernetzten Polymermikroteilchen erhältlich sind, indem
(A) ein Polyesterpolyol, ein Gemisch aus Polyesterpolyolen oder eine Mischung aus Polyesterpolyolen und weiteren Verbindungen, die gegenüber NCO-Gruppen reaktive Gruppen enthalten, mit einem Polyisocyanat oder einem Gemisch aus Polyisocyanaten umgesetzt wird, wobei die mittlere OH-Funktionalität der Polyesterpolyolkomponente über 2 und/oder die mittlere NCO-Funktionalität der Polyisocyanatkompo-nente über 2 liegt und zumindest ein Teil der Polyesterpolyolkomponente und/oder zumindest ein Teil der Polyisocyanatkomponente stabilisierende ionische- und/oder Poly(oxyalkylen)gruppen enthält, wobei die ionischen Gruppen durch Neutralisierung von zur Salzbildung befähigten Gruppen mit Hilfe von Basen bzw. Säuren gebildet werden und
(B) nachdem mindestens 25 % der NCO-Gruppen umgesetzt worden sind, das so erhaltene Reaktionsgemisch in Wasser dispergiert wird.

2. Verwendung eines wäßrigen Lackes, der vernetzte Polymermikroteilchen enthält, die erhältlich sind, indem
(A) ein Polyesterpolyol, ein Gemisch aus Polyesterpolyolen oder eine Mischung aus Polyesterpolyolen und weiteren Verbindungen, die gegenüber NCO-Gruppen reaktive Gruppen enthalten, mit einem Polyisocyanat oder einem Gemisch aus Polyisocyanaten umgesetzt wird, wobei die mittlere OH-Funktionalität der Polyesterpolyolkomponente über 2 und/oder die mittlere NCO-Funktionalität der Polyisocyanatkomponente über 2 liegt und zumindest ein Teil der Polyesterpolyolkomponente und/oder zumindest ein Teil der Polyisocyanatkomponente stabilisierende ionische- und/oder Poly(oxyalkylen)gruppen enthält, wobei die ionischen Gruppen durch Neutralisation von zur Salzbildung befähigten Gruppen mit Hilfe von Basen bzw. Säuren gebildet werden und
(B) nachdem mindestens 25 % der NCO-Gruppen umgesetzt worden sind, das so erhaltene Reaktionsgemisch in Wasser dispergiert wird,
zur Herstellung von matten Füller- und/oder Steinschlagzwischengrundschichten in Automobillackierungen.

3. Verfahren oder Verwendung nach Anspruch 1 oder 2, dadurch gekennzeichnet, daß als Polyesterpolyol ein carboxylgruppenhaltiges Polyesterpolyol mit einem zahlenmittleren Molekulargewicht von 500 bis 1500 eingesetzt wird.

4. Verfahren oder Verwendung nach einem der Ansprüche 1 bis 3, dadurch gekennzeichnet, daß ein cycloaliphatisches und/oder aliphatisches Polyisocyanat eingesetzt wird.

5. Verfahren oder Verwendung nach einem der Ansprüche 1 bis 4, dadurch gekennzeichnet, daß die Stufe (A) in einem gegenüber NCO-Gruppen inerten, wasserverdünnbaren organischen Lösemittel durchgeführt wird.

6. Verfahren oder Verwendung nach einem der Ansprüche 1 bis 5, dadurch gekennzeichnet, daß das in Stufe (A) erhaltene Reaktionsgemisch in einer solchen Menge Wasser dispergiert wird, daß die erhaltene Dispersion einen Feststoffgehalt von 20 bis 50 Gew.-% aufweist.

7. Verfahren oder Verwendung nach einem der Ansprüche 1 bis 6, dadurch gekennzeichnet, daß das in Stufe (A) erhaltene Reaktionsgemisch in Wasser dispergiert wird, sobald 30 bis 60 % der NCO-Gruppen umgesetzt worden sind.

## Claims

1. Process for the production of a multi-layer finish on a substrate surface, in which
(1) a pigmented aqueous basecoat which contains crosslinked polymer microparticles obtainable from polyester-polyols and polyisocyanates is applied to the substrate surface,
(2) a polymer film is formed from the composition applied in stage (1),
(3) a transparent topcoat is applied to the basecoat thus obtained and
(4) the basecoat is then stoved together with the topcoat,
characterized in that the crosslinked polymer microparticles contained in the basecoat are obtainable by
(A) reacting a polyester-polyol, a mixture of polyester-polyols or a mixture of polyester-polyols and further compounds containing groups which are reactive towards NCO groups with a polyisocyanate or with a mixture of polyisocyanates, the average OH functionality of the polyester-polyol component being more than 2 and/or the average NCO functionality of the polyisocyanate component being more than 2 and at least part of the polyester-polyol component and/or at least part of the polyisocyanate component containing stabilizing ionic and/or poly(oxyalkylene) groups, the ionic groups being formed by neutralization, with the aid of bases or acids, of groups capable of salt formation, and
(B) when at least 25% of the NCO groups have reacted, dispersing the resulting reaction mixture in water.

2. Use of a water-borne coating which contains crosslinked polymer microparticles obtainable by
(A) reacting a polyester-polyol, a mixture of polyester-polyols or a mixture of polyester-polyols and further compounds containing groups which are reactive towards NCO groups with a polyisocyanate or with a mixture of polyisocyanates, the average OH functionality of the polyester-polyol component being more than 2 and/or the average NCO functionality of the polyisocyanate component being more than 2 and at least part of the polyester-polyol component and/or at least part of the polyisocyanate component containing stabilizing ionic and/or poly(oxyalkylene) groups, the ionic groups being formed by neutralization, with the aid of bases or acids, of groups capable of salt formation, and
(B) when at least 25% of the NCO groups have reacted, dispersing the resulting reaction mixture in water,
for the production of dull matt filler and/or stone-chip intermediate primer layers in automotive finishes.

3. Process or use according to Claim 1 or 2, characterized in that a polyester-polyol which contains carboxyl groups and has a number-average molecular weight of 500 to 1500 is employed as the polyester-polyol.

4. Process or use according to one of Claims 1 to 3, characterized in that a cycloaliphatic and/or aliphatic polyisocyanate is employed.

5. Process or use according to one of Claims 1 to 4, characterized in that stage (A) is carried out in a water-dilutable organic solvent which is inert towards NCO groups.

6. Process or use according to one of Claims 1 to 5, characterized in that the reaction mixture obtained in stage (A) is dispersed in an amount of water such that the resulting dispersion has a solids content of 20 to 50% by weight.

7. Process or use according to one of Claims 1 to 6, characterized in that the reaction mixture obtained in stage (A) is dispersed in water as soon as 30 to 60% of the NCO groups have been reacted.

## Revendications

1. Procédé de production d'un enduit de laque à couches multiples sur une surface de substrat, lors duquel
(1) l'on procède à l'application, sur la surface du substrat, d'une laque de base aqueuse pigmentée, qui contient des microparticules réticulées de polymère que l'on peut obtenir à partir de polyesterpolyols et de polyisocyanates,
(2) l'on procède à la formation d'un film de polymère à partir de la composition appliquée dans l'étape (1),
(3) l'on procède à l'application, sur la couche de base ainsi obtenue, d'une laque de finition transparente et lors duquel ensuite
(4) l'on procède à la cuisson de la couche de base conjointement à la couche de finition,
caractérisé en ce que l'on peut obtenir les microparticules réticulées de polymère contenues dans la laque de base, en ce que
(A) l'on fait réagir un polyesterpolyol, un mélange de polyesterpolyols ou un mélange de polyesterpolyols et d'autres composés, qui contiennent des groupements réactifs vis-à-vis des groupements NCO, avec un polyisocyanate ou un mélange de polyisocyanates, la fonctionnalité OH moyenne du composant de polyesterpolyol se situant au-dessus de 2 et/ou la fonctionnalité NCO moyenne du composant de polyisocyanate se situant au-dessus de 2 et au moins une partie du composant de polyesterpolyol et/ou au moins une partie du composant de polyisocyanate contenant des groupements ioniques et/ou poly(oxyalkylènes) stabilisants, les groupements ioniques étant formés par la neutralisation de groupements capables de former des sels à l'aide de bases, respectivement d'acides, et en ce que,
(B) après voir fait réagir au moins 25 % des groupements NCO, l'on procède à la mise en dispersion dans l'eau du mélange réactionnel ainsi obtenu.

2. Utilisation d'une laque aqueuse, qui comprend des microparticules réticulées de polymère, que l'on peut obtenir en ce que
(A) l'on fait réagir un polyesterpolyol, un mélange de polyesterpolyols ou un mélange de polyesterpolyols et d'autres composés, qui contiennent des groupements réactifs vis-à-vis des groupements NCO, avec un polyisocyanate ou un mélange de polyisocyanates, la fonctionnalité OH moyenne du composant de polyesterpolyol se situant au-dessus de 2 et/ou la fonctionnalité NCO moyenne du composant de polyisocyanate se situant au-dessus de 2 et au moins une partie du composant de polyesterpolyol et/ou au moins une partie du composant de polyisocyanate contenant des groupements ioniques et/ou poly(oxyalkylènes) stabilisants, les groupements ioniques étant formés par la neutralisation de groupements capables de former des sels à l'aide de bases, respectivement d'acides, et en ce que,
(B) après voir fait réagir au moins 25 % des groupements NCO, l'on procède à la mise en dispersion dans l'eau du mélange réactionnel ainsi obtenu, dans l'optique de la production de couches de base de charges et/ou antigravillonnage dans les enduits de laque automobiles.

3. Procédé ou utilisation selon la revendication 1 ou 2, caractérisé en ce que l'on utilise en tant que polyesterpolyol un polyesterpolyol contenant des groupements carboxyles ayant un poids moléculaire moyen au nombre de 500 à 1 500.

4. Procédé ou utilisation selon l'une quelconque des revendications 1 à 3, caractérisé en ce que l'on utilise un polyisocyanate cycloaliphatique et/ou aliphatique.

5. Procédé ou utilisation selon l'une quelconque des revendications 1 à 4, caractérisé en ce que l'on effectue l'étape (A) dans un solvant organique hydrodiluable inerte vis-à-vis des groupements NCO.

6. Procédé ou utilisation selon l'une quelconque des revendications 1 à 5, caractérisé en ce que l'on procède à la mise en dispersion du mélange réactionnel obtenu dans l'étape (A) dans une quantité d'eau telle que la dispersion obtenue présente une teneur en matières solides de 20 à 50 % en poids.

7. Procédé ou utilisation selon l'une quelconque des revendications 1 à 6, caractérisé en ce que l'on procède à la mise en dispersion, dans l'eau, du mélange réactionnel obtenu dans l'étape (A) dès que de 30 à 60 % des groupements NCO ont réagi.
